Europäisches Patentamt

European Patent Office

Office européen des brevets

(11) Numéro de publication: **0 321 325 B1**

(12) **FASCICULE DE BREVET EUROPEEN**

(45) Date de publication de fascicule du brevet: **16.09.92** (51) Int. Cl.⁵: **G05B 19/12**, G05B 19/405

(21) Numéro de dépôt: **88403138.6**

(22) Date de dépôt: **09.12.88**

(54) **Système de commande d'un robot.**

(30) Priorité: **14.12.87 FR 8717388**

(43) Date de publication de la demande:
**21.06.89 Bulletin 89/25**

(45) Mention de la délivrance du brevet:
**16.09.92 Bulletin 92/38**

(84) Etats contractants désignés:
**DE ES GB IT NL**

(56) Documents cités:
EP-A- 0 147 337    EP-A- 0 167 211
EP-A- 0 227 113    WO-A-86/06303
FR-A- 2 385 178    FR-A- 2 477 303

**LE NOUVEL AUTOMATISME vol. 29, no. 45,
avril 1984, Paris France page 65 - 73; M.
FERRETTI: "Automoteurs et Transtockeurs,
la manutention automatisee"**

**PATENT ABSTRACTS OF JAPAN vol. 11, no.
256 (P-607) 2703 20 août 1987, &JP-A-62
63305**

(73) Titulaire: **GEMPLUS CARD INTERNATIONAL
15 avenue Camille Pelletan
F-13090 Aix en Provence(FR)**

(72) Inventeur: **Gloton, Jean-Pierre
Cabinet BALLOT-SCHMIT 84 avenue Kléber
F-75116 Paris(FR)**

(74) Mandataire: **Ballot, Paul Denis Jacques
Cabinet Ballot-Schmit, 7, rue le Sueur
F-75116 Paris(FR)**

## Description

La présente invention a pour objet un système de commande d'un robot. Elle concerne plus particulièrement des robots dont la commande est de type électronique. L'emploi de tels robots se généralise, notamment dans le domaine de la manutention d'objets stockés dans des entrepôts. L'invention vise essentiellement à faciliter les tâches de gestion et d'utilisation de tels robots par des personnels à priori non qualifiés.

On connaît, par exemple, des robots de manutention dont la mission consiste à prélever des objets sur un stock, à les transporter, et à les placer en un autre endroit, d'où ils sont destinés à être repris en vue de leur distribution à un destinataire, à un client. Des installations automatisées de commande de ces robots sont de deux type. Dans un premier type, l'entrepôt est aménagé de manière à ce que, sur les lieux de passage du robot, des fils électriques soient enterrés. Ils sont destinés à l'alimentation en puissance de ce robot ainsi qu'à sa commande. L'inconvénient des installations de ce type est qu'elles ne sont pas souples : elles ne peuvent pas être modifiées ou complétées facilement et en plus elles sont chères. En effet elles nécessitent une infrastructure importante dans les entrepôts. Celle-ci est bien plus exigeante que la simple réalisation de surfaces lisses sur le sol de l'entrepôt pour permettre de laisser circuler les robots. Dans un autre type d'installation, plus souple, les robots sont télécommandés par des ondes électromagnétiques. Ce dernier type d'installation, tout en étant moins cher, présente de nombreux inconvénients : essentiellement la propagation des ondes électromagnétiques ne peut pas être assurée dans de bonnes conditions dans tous les milieux industriels. La transmission des instructions d'exécution aux robots n'est pas sûre.

Quel que soit le système de transmission des instructions au robot, il apparaît un autre problème. Le problème concerne la qualification des personnels chargés de gérer les robots. Cette qualification est, chez certains d'entre eux, insuffisante. En pratique, ces personnels ne sont pas aptes à dicter, même en un langage informatique très évolué, les instructions à faire exécuter par les robots. Il en résulte que les peronnels affectés à de telles tâches doivent être plus qualifiés. Ceci entraîne des coûts salariaux plus importants.

Si, en outre, dans une installation automatique, il est prévu de gérer plusieurs robots, la définition d'un système compliqué de gestion de l'ensemble de ces robots doit être mise au point. Cette définition prend beaucoup de temps. Elle impose ipso facto une centralisation de la commande des robots et justifie encore plus la nomination de personnels qualifiés pour gérer des opérations qui, en elles-mêmes, sont peu complexes et qui pourraient normalement être effectuées par des manutentionnaires. Ultérieurement, la modification de ce système complexe est elle-même complexe. En retenant un tel mode centralisé de gestion, on adhère, en définitive, à un système dont l'évolution sera toujours entravée par sa spécificité.

Dans le document EP-A-0 227 113 il est prévu un système dans lequel des machines à commande numérique sont pilotées par un programme contenu dans une carte à puce. Il faut cependant intervenir sur chaque machine en fin de session pour changer le programme et en mettre un nouveau.

L'invention a pour objet de remédier à cet inconvénient en proposant un système de commande des robots à caractère universel dans lequel les robots viennent se servir auprès d'un distributeur automatique. Ils y prélèvent des cartes électroniques, dites cartes à puce, comportant en mémoire un programme d'instructions à exécuter par ce robot. La tâche des manutentionnaires consiste alors simplement, en fonction des commandes de travaux à exécuter, à empiler dans le distributeur les cartes électroniques à mémoire correspondant à la chronologie de ces commandes. Pour faciliter leur tâche, ces cartes à mémoire, qui sont sensiblement planes, portent sur une de leurs faces un emplacement destiné à recevoir des indications compréhensibles. Ces indications représentent, éventuellement d'une manière symbolique, le programme à exécuter. L'enregistrement des programmes dans les cartes à puce simplifie le travail des ouvriers manutentionnaires. La lecture des programmes d'instructions contenus dans ces cartes, par un lecteur de carte porté par le robot, assure alors d'une manière simple la transmission des instructions à exécuter. Pour son déplacement le robot peut ensuite utiliser la présence de balises de repérage situées sur son parcours.

L'invention a donc pour objet un système de commande d'un robot comportant des moyens d'enregistrer des programmes d'instructions et des moyens de transmettre ces programmes d'instructions au robot, et, dans le robot, des moyens de recevoir ces instructions et de les excécuter, ces moyens d'enregistrer ces instructions comportant des cartes dites à puce comme support d'enregistrement, ces cartes étant munies d'un microprocesseur, caractérisé en ce que les moyens de transmettre comportent un distributeur automatique de cartes pour coopérer avec les moyens de recevoir.

L'invention sera mieux comprise à la lecture de la description qui suit et à l'examen de la figure qui l'accompagne.

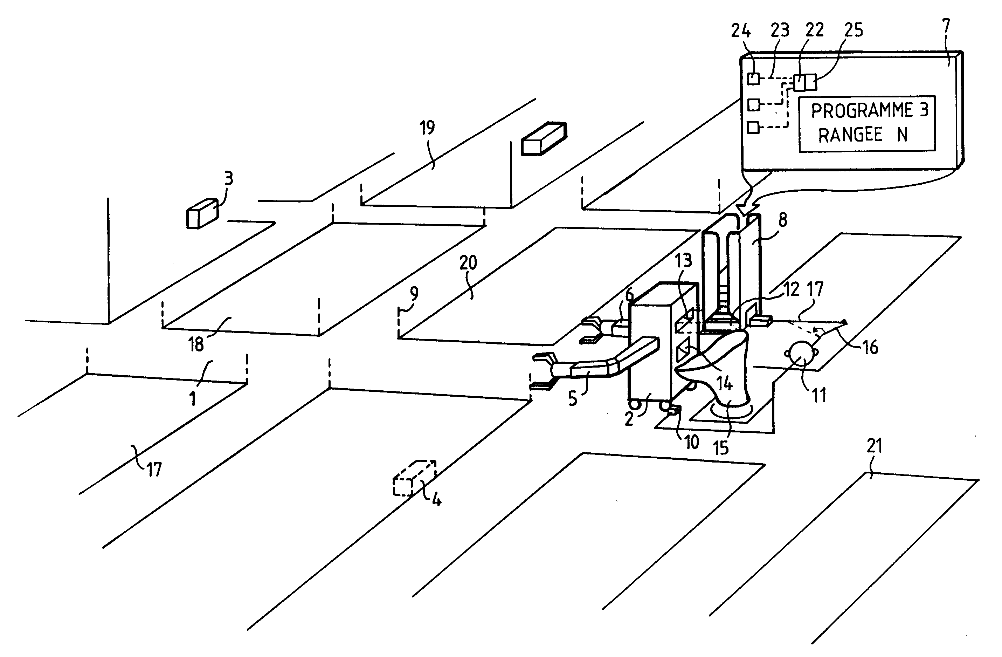

La figure 1 unique montre, à titre d'exemple, une représentation schématique d'une installation de manutention automatisée dans laquelle des travaux de manutention sont effectués par un robot.

Dans une installation comportant des allées de circulation telles que 1, un robot 2 est amené à se déplacer pour prélever des objets 3, en des endroits choisis en fonction d'un programme, et pour venir les placer en des lieux 4 d'où ils seront ultérieurement repris. A cette fin, le robot comporte des bras de manipulation tels que 5 et 6. Ce qui caractérise l'invention est que les programmes des instructions à accomplir par le robot sont mémorisés dans des cartes électroniques dites cartes à puce telles que la carte 7. Ces cartes sont empilées, par un opérateur de gestion de la manutention, dans un distributeur 8 automatique de cartes.

Le fonctionnement de l'installation est le suivant : lorsque le robot 2 a exécuté toutes les tâches qu'on lui avait programmées, notamment en se repérant sur des balises telles que 9 situées aux endroits caractéristiques de l'aire de stockage, il s'approche du distributeur 8. En s'approchant du distributeur 8 il actionne une pédale 10 située à proximité de ce distributeur 8. Cette pédale 10 provoque la mise en marche d'un moteur 11 d'insertion d'une nouvelle carte à puce 12 dans un lecteur 13 de cartes à puce solidaire du robot 2. Au moment de cette insertion, le robot peut rejeter par une trappe 14 dans un bac de récupération 15 une précédente carte à puce dont il vient d'effectuer les instructions. Le distributeur comporte pour permettre l'insertion, par exemple, une gachette 16 qui entraîne une tige d'insertion 17. La tige 17 appuie, pour l'insérer, sur l'extrémité de la carte à puce qui se trouve à la base de la pile contenue dans le distributeur 8.

L'intérêt de la solution de l'invention se présente en particulier lorsque l'installation est complexe : lorsqu'elle est destinée à travailler avec plusieurs robots. En effet, le prochain robot qui s'approche du distributeur 8 prélève la nouvelle carte qui se trouve à la base de cette pile de sorte que la répartition des tâches entre les différents robots s'effectue sans que le manutentionnaire ait à évaluer la durée d'exécution de chacune et sans qu'il ait à affecter, au risque de se tromper et de perdre du temps, une certaine somme de travail à un robot plutôt qu'à un autre.

En outre, au cours de l'exécution des instructions du programme contenu dans sa carte à puce, un robot peut rencontrer des difficultés. Par exemple l'accès par une des voies à un endroit de l'aire de stockage peut être obstrué, par exemple, par la présence d'un autre robot qui est déjà en train d'y manipuler. On peut dans ce cas décider de faire passer l'exécution de l'instruction à exécuter après l'exécution d'une autre instruction qui, elle, serait possible. Par exemple, cette autre instruction est possible parce qu'elle nécessite l'emprunt d'une voie de circulation qui n'est pas obstruée par un autre robot. Cette instruction non exécutée peut alors être gardée en mémoire pour être exécutée à la fin de toutes les instructions qui composent le programme. Cependant, cette manière de faire peut avoir deux inconvénients. Premièrement le programme pré-enregistré peut avoir été conçu de manière à optimiser les déplacements du robot, et donc l'exécution des tâches automatiques. Le fait de faire sauter certaines tâches et de les replacer, au moment où elles sont omises, à la fin de la liste des instructions à effectuer par le programme, peut amener une perte considérable d'efficacité dans l'exécution de ce programme. En outre, certaines opérations ne doivent pas être effectuées après certaines autres : par exemple il n'est pas conseillé de charger des objets lourds au dessus d'objets fragiles.

La solution la plus simple pour remédier à ces inconvénients peut être d'attendre que la voie de circulation obstruée par le robot soit libérée. Dans l'invention, on a découvert qu'il peut être tiré parti du fait que les cartes à puces comportent généralement une mémoire (pour contenir les instructions du programme) et aussi un microprocesseur. Ce microprocesseur peut alors tenir compte des contraintes d'exécution du ou des programmes qui y sont enregistrés, ces contraintes étant essentiellement liées au déroulement effectif du programme, et permettre l'optimisation de l'exécution de ces tâches qui ont dû être omises parce que leur exécution a momentanément été rendue impossible. En résumé, plutôt que de remplacer petit à petit le déroulement organisé des instructions du programme par un déroulement anarchique résultant des contraintes effectives d'exécution, le microprocesseur peut permettre par un programme enregistré, d'optimiser à nouveau le déroulement de ces exécutions en fonction de la situation réelle.

Supposons, par exemple, que l'aire de stockage comporte des régions connexes et que le programme du robot ait consisté à transporter des objets, situés dans une aire 17, dans une aire 18 connexe de l'aire 17, des objets situés dans une aire 18, dans une aire 19 connexe de l'aire 18, et ainsi de suite. Si, par exemple, le transfert dans les régions 19 des objets contenus dans les régions 18 ne peut pas être momentanément effectué, il peut être utile d'attendre que le robot se replace dans une région 20 proche de la région 18 pour effectuer ces tâches qui n'ont pas été effectuées. Ceci est préférable à la solution qui consiste à attendre que le robot ait terminé sa ronde et qu'il se trouve à l,autre bout de l'entrepôt, par exemple à proximité d'une région 21. Dans ce cas, en effet, la perte de temps correspond au temps de transit de ce robot de la région 21 jusqu'à la région 18. On peut, par exemple, concevoir un programme d'optimisation qui impose que les numéros d'ordre des régions à fréquenter ne soient pas trop différents les uns des autres, d'une instruction à l'autre.

Dans ce but, les cartes à puce 7 comportent donc des zones de mémorisation 22 pour échanger, par des connexions telles que 23 et des métallisations de contact 24 apparaissant en surface de ces cartes, les instructions à exécuter avec le robot 2. Elles comportent aussi un microprocesseur 25 chargé de gérer l'optimisation de l'exécution des tâches. L'utilisation de ces cartes à mémoire peut en outre être amélioré en augmentant le caractère interactif de ces cartes avec le robot : le robot peut avec des fonctions d'enregistrement de son lecteur 13 (qui est alors un lecteur-enregistreur) introduire dans la zone mémoire 22 de la carte 7, des informations relatives aux conditions d'exécution de sa tâche : température de l'aire de stockage, durée des transports élémentaires etc... Après le prélèvement des cartes dans le bac de récupération 15, on peut procéder au dépouillement des informations qu'elles contiennent.

Pour faciliter la tâche des opérateurs, les cartes peuvent contenir, sur une de leur face (de préférence sur celle qui est destinée à être tournée vers le dessus dans la pile), des indications en langage clair. Ces indications, telles que, par exemple "PROGRAMME 3 - RANGEE N", renseignent sur la nature du programme enregistré dans la carte. Ces indications peuvent aussi être remplacées par des logotypes.

## Revendications

1. Système de commande d'un robot (2) comportant des moyens (7) d'enregistrer des programmes d'instructions et des moyens (8, 11) de transmettre ces programmes d'instructions au robot et, dans le robot, des moyens (13) de recevoir ces programmes d'instructions et d'exécuter les instructions, ces moyens d'enregistrer ces instructions comportant des cartes (7) dites à puce comme support d'enregistrement, ces cartes étant munies d'un microprocesseur, caractérisé en ce que les moyens de transmettre comportent un distributeur (8) automatique de cartes pour coopérer (10, 11) avec les moyens de recevoir.

2. Système selon la revendication 1 caractérisé en ce que les puces des cartes comportent une zone (22) de mémorisation et un microprocesseur (25) destiné à organiser (11, 19, 20, 21) l'exécution des instructions par le robot.

3. Système selon la revendication 1 ou la revendication 2 caractérisé en ce que les moyens de recevoir comportent un lecteur (13) de carte à puce.

4. Système selon l'une quelconque des revendications 1 à 3 caractérisé en ce que le distributeur comporte des moyens pour placer en file d'attente (12) les programmes à accomplir par le robot.

5. Système selon l'une quelconque des revendications 1 à 4 caractérisé en ce que les cartes sont planes et comportent sur au moins une de leur surface un emplacement pour recevoir des indications humainement compréhensibles afin de représenter le programme à accomplir.

6. Système selon l'une quelconque des revendications 1 à 5, caractérisé en ce qu'il comporte des balises (9) placés sur un chemin dudit robot, et dans le robot des moyens pour identifier la position du robot par rapport à ces balises.

7. Système selon l'une quelconque des revendications 1 à 6, caractérisé en ce qu'il comporte des moyens pour enregistrer les conditions dans lesquelles ont été exécutées les instructions.

## Claims

1. Control system of a robot (2), comprising means (7) for recording instruction programs and means (8,11) for transmitting these instruction programs to the robot and, in the robot, means (11) for receiving these instruction programs and executing the instruction, these means for recording these instructions comprising cards (7) of the so-called microchip type as a recording support, these cards being equipped with a microprocessor, characterized by the fact that the transmission means comprise an automatic card distributor (8) designed to cooperate (10,11) with the reception means.

2. System in accordance with Claim 1, characterized by the fact that the chips of the cards comprise a memory zone (22) and a microprocessor (25) of which the purpose is to organize (11,19,20,21) the execution of the instructions by the robot.

3. System in accordance with Claim 1 or Claim 2, characterized by the fact that the reception means comprise a microchip card reader (13).

4. System in accordance with any one of Claims 1 to 3, characterized by the fact that the distributor comrpises means for placing in a waiting series (12) the programs to be executed by the robot.

5. System in accordance with any one of Claims 1 to 4, characterized by the fact that the cards are flat and are provided on at least one of their surfaces with a position for the reception of humanly comprehensible indications in order to represent the program to be executed.

6. System in accordance with any one of claims 1 to 5, characterized by the fact that it comprises beacons (9) situated on a track of the said robot and comprises in the robot means for identifying the position of the robot in relation to the said beacons.

7. System in accordance with any one of Claims 1 to 6, characterized by the fact that it comprises means for recording the conditions under which the instructions have been executed.

**Patentansprüche**

1. System zur Steuerung eines Roboters (2) mit Einrichtungen (7) zur Speicherung von Instruktionsprogrammen und Einrichtungen (8 und 11) zum Weiterleiten dieser Programme zum Roboter und mit im Roboter angeordneten Einrichtungen (13) zum Empfangen dieser Instruktionsprogramme und zum Ausführen der Instruktionen, wobei die Einrichtungen zum Speichern der Instruktionen als Speichermedium dienende IC-Karten (7) umfaßt, die mit einem Mikroprozessor versehen sind, dadurch gekennzeichnet, daß die Einrichtungen zum Weiterleiten der Programme einen automatischen Kartenverteiler (8) umfassen, um mit den Empfangseinrichtungen zusammenzuarbeiten (10 und 11).

2. System nach Anspruch 1, dadurch gekennzeichnet, daß die IC der Karten einen Bereich (22) zum Einlesen und einen Mikroprozessor (25) umfassen, der das Ausführen der Instruktionen durch den Roboter steuert (11, 19, 20 und 21).

3. System nach Anspruch 1 oder Anspruch 2, dadurch gekennzeichnet, daß die Einrichtungen zum Empfangen der Programme eine Einrichtung zum Lesen (13) der IC-Karte enthalten.

4. System nach einem der Ansprüche 1 bis 3, dadurch gekennzeichnet, daß der Verteiler Einrichtungen umfaßt, um die durch den Roboter auszuführenden Programme in eine Warteschlange (12) zu verlegen.

5. System nach einem der Ansprüche 1 bis 4, dadurch gekennzeichnet, daß die Karten flach sind und auf mindestens einer ihrer Flächen eine Stelle umfassen, um für Menschen verständliche Anweisungen aufzunehmen, die das auszuführende Programm jeweils angeben.

6. System nach einem der Ansprüche 1 bis 5, dadurch gekennzeichnet, daß es auf einem Pfad des Roboters angeordnete Signaleinrichtungen (9) umfaßt, wobei der Roboter Einrichtungen zum Erkennen seiner Lage relativ zu den Signaleinrichtungen umfaßt.

7. System nach einem der Ansprüche 1 bis 6, dadurch gekennzeichnet, daß es Einrichtungen zum Speichern der Bedingungen umfaßt, in denen die Instruktionen ausgeführt worden sind.

PROGRAMME 3
RANGEE N

EP 0 321 325 B1